# EUROPÄISCHE PATENTANMELDUNG

(11) **EP 4 756 254 A1**
(43) Veröffentlichungstag der Anmeldung: **10.06.2026**
(21) Anmeldenummer: 24218505.6
(22) Anmeldetag: 09.12.2024
(51) Int. Cl.: F16H 25/22

(54) **KUGELGEWINDETRIEB MIT INNERER KUGELUMLENKUNG**

(71) Anmelder: SFS Group International AG, 9435 Heerbrugg (CH)
(72) Erfinder: Hanselmann, Jasmin, 9450 Altstätten (CH); Sinz, Daniel, 6921 Kennelbach (AT); Grabherr, Heribert, 88239 Wangen im Allgäu (DE); Zach, Marijo, 9443 Widnau (CH)

(57) **Zusammenfassung**

Ein Kugelgewindetrieb (100) ist im Grundsatz aufgebaut aus einer Gewindespindel (110, 210) und eine Spindelmutter (120, 210), die die Gewindespindel (110, 210) koaxial zumindest teilweise umschliesst sowie einer Vielzahl von Kugeln (150) die im Zwischenraum zwischen Gewindespindel und Spindelmutter in einem helixförmigen Kugelkanal (130) umlaufen. Mindestens eine in der Gewindespindel angeordnete Kugelrückführung (160) aus zwei Kugelumlenkungen (170, 170', 270) mit einem dazwischenliegenden mittenachsparallelen Umlenkkanal (180, 280) sorgt für einen geschlossenen Kugelumlauf.

Die Kugeln (150) folgen einem Leitpfad (260') aus dem Kugelkanal in den Umlenkkanal (280), der stets mindestens einen kreisförmigen Durchlass mit lichter Weite Lw aufweist und mindestens zwei Umlenkabschnitte (271, 272) mit unterscheidbaren Krümmungen umfasst. Der zweite Umlenkabschnitt (272), der unmittelbar an den Übergang zum Kugelkanal (280) grenzt ist aus der Grundform eines Viertelbogens (250) abgeleitet. Der Übergang (253) von der Kugelumlenkung (270) zum Umlenkkanal (280) ist parallel zur Abschlussebene (254) des idealen Viertelbogens (250) um eine Distanz d₁ zurückversetzt ist und zugleich der Durchlass Lw in der Höhe um eine Distanz d₂ erweitert ist. Dabei gilt d₁ ≈ d₂.

## Beschreibung

Die vorliegende Erfindung befasst sich mit einem Kugelgewindetrieb zur Verwendung in einer elektromechanischen Bremse, spezifisch mit der Kugelumlenkung aus dem Umlaufpfad zwischen der Gewindespindel und der Spindelmutter.

### HINTERGRUND

Als Kugelumlaufspindel oder auch Kugelgewindetrieb (KGT) wird üblicherweise ein Wälzschraubtrieb bezeichnet mit Kugeln als Wälzkörpern. Technisch betrachtet sind KGT Schraubgetriebe, bei dem die Drehbewegung einer Antriebsmaschine in eine Längsbewegung verwandelt wird.

Zu den Hauptbestandteilen eines KGT zählen eine Gewindespindel und eine diese Spindel umgreifende Spindelmutter. Zwischen diesen beiden Bauteilen laufen im Betrieb Kugeln um. Die Gewindezüge der Gewindespindel wie auch der Spindelmutter sind als Kugelrillen mit einem geeigneten Querprofil ausgebildet und komplementär so aufeinander abgestimmt, dass sie gemeinsam (im montierten Zustand) einen helixförmigen, aus zwei Halbschalen gebildeten Kugelkanal bilden. Anders als bei einer Schraube-Mutter-Verbindung, bei der die Gewindeflanken flächig aufeinander gleiten, übernehmen beim KGT die im Gewinde umlaufenden Kugeln die Lastübertragung zwischen Mutter und Spindel. Die flächige Gleitbewegung wird also durch eine (Ab-)Rollbewegung ersetzt, was mit verringerter Reibung einhergeht.

Um einen geschlossenen Umlaufpfad für die Kugeln zu erhalten, wird eine Kugelrückführung eingesetzt. Diese hat die Aufgabe, die Kugeln an einer ersten Stelle aus dem Kugelkanal zwischen Spindelmutter und Gewindespindel herauszuheben und an einer zweiten Stelle wieder zuzuführen. Die Kugelrückführung stellt also einen Bypass dar, der eine oder mehrere Gewindezüge des Mutter-Spindelsystems überbrückt und damit einen geschlossenen Umlaufpfad für die Kugeln eines KGT bildet. Eine Kugelumlenkung leitet dazu die Kugeln aus dem Kugelkanal aus und überführt sie in einen Umlenkkanal. Nach Durchlaufen des Umlenkkanals werden die Kugeln über eine zweite Kugelumlenkung wieder in den Kugelkanal zurückleitet. Die Kugelrückführung besteht also aus zwei Kugelumlenkungen und dem dazwischenliegenden Umlenkkanal.

In der Regel werden die Kugeln aus dem Kugelkanal radial nach aussen geführt und dann innerhalb oder ausserhalb der Spindelmutter in einem Kanal, einem Rohr oder einer Bohrung geführt, bevor sie dann wieder in den Kugelkanal zwischen Gewindespindel und Spindelmutter eingeleitet werden (Aussenumlenkung). Es sind aber auch sogenannte Innenumlenkungen bekannt, bei denen die Kugelumlenkung radial nach innen in die Gewindespindel führen.

### PROBLEMSTELLUNG

Befindet sich ein Kugelgewindetrieb im Betrieb unter Last, stehen die Kugeln im Kugelkanal vor allem unter Druckspannungen. Diese müssen in der Kugelumlenkung abgebaut werden, bevor die Kugeln lastfrei in den Umlenkkanal geleitet werden können. Die Rückführung in den Kugelkanal muss Entsprechendes in umgekehrter Reihenfolge leisten. Die Aufgabe besteht also darin eine Kugelumlenkung zu definieren, die möglichst präzise die Kugelentlastung und Umlenkung in den Umlenkkanal (bzw. umgekehrt) gewährleisten kann. Die Kugelumlenkungen sollen ferner einfach geformt und günstig herstellbar sein

### STAND DER TECHNIK

In der DE 198 57 581 A1 ist ein Kugelgewindetrieb mit Innenumlenkung gezeigt, bei dem die Umlenkung der Kugeln in einen Rücklaufkanal mittels Umlenkstücken realisiert wird, die einen weiten Viertelkreis beschreiben und dann die Kugeln in einer engen Kurve in den Rücklaufkanal leiten.

Die US 2015/369349 A1 beschreibt einen zweiteilig aufgebaute Kugelgewindetrieb mit Innenumlenkung in die Gewindespindel. Der Pfad der Kugel in der Kugelumlenkung beschreibt zunächst einen Halbkreis zwischen dem Kugelkanal und der Tieflage des Umlenkkanals, der in der Zentralachse der Gewindespindel angelegt ist. Eine im Vergleich dazu kurze, niveaugleiche Umlenkung leitet die Kugeln in den in der Zentralachse der Gewindespindel angeordneten Umlenkkanal.

Das Dokument WO 2015 / 081 131 A1 zeigt einen Kugelgewindetrieb mit Innenumlenkung und in der Zentralachse angelegtem Umlenkkanal. Die Kugeln werden durch einen radialen Schacht direkt auf das Niveau des Umlenkkanals geleitet. Das Ausheben und Umlenken wird durch ein in den Schacht eingesetztes Rohrstück gewährleistet, das schaufelförmige Zungen aufweist, die die Kugeln entsprechend umlenken.

### BESCHREIBUNG DER ERFINDUNG

Die vorliegende Erfindung geht aus von einem generischen Kugelgewindetrieb (KGT) mit Innenumlenkung. So ein KGT umfasst eine Gewindespindel und eine Spindelmutter, die die Gewindespindel koaxial zumindest teilweise umschliesst, das heisst, die hülsenförmige Spindelmutter kann, bezogen auf die Mittenachse des KGT, kürzer gebaut sein als die Spindelmutter. Im Zwischenraum zwischen Gewindespindel und Spindelmutter laufen im Betrieb eine Vielzahl von Kugeln in einem helixförmigen (spiraligen) Kugelkanal um. Um einen geschlossenen Umlaufpfad für diese Kugeln zu gewährleisten ist in der Gewindespindel mindestens eine Kugelrückführung mit zwei Kugelumlenkungen und einem dazwischenliegenden Umlenkkanal vorgesehen. Diese Kugelumlenkungen sind in entsprechend ausgestalteten Öffnungen in der Gewindespindel so einsetzbar, dass sie die umlaufenden Kugeln aus dem Kugelkanal in den Umlenkkanal ein- bzw. ausleiten können. Diese Öffnungen können bevorzugt wie Ovale oder Langlöcher geformt sein, die sich durch Fräsen einfach herstellen lassen. Der Umlenkkanal ist als längsachs-parallele Bohrung in der Gewindespindel angelegt. Die Herstellung des Kanals kann aber auch durch äquivalente Verfahren realisiert werden.

Im Folgenden wird der Leitpfad der Kugeln betrachtet. Mit diesem Begriff ist grundsätzlich der durch die mechanischen bzw. strukturellen Begrenzungen in der Kugelrille, dem Kugelkanal, der Kugelumlenkung und dem Umlenkkanal vorgegebene Sollweg der Kugeln im Betrieb des KGTs gemeint. In den angehängten Zeichnungen ist dieser Leitpfad idealisiert durch eine Linie markiert, die durch die Lage der Schwerpunkte der Kugeln im Umlauf des KGT gebildet wird. Dass infolge von Abnützung, (notwendigem) Spiel bzw. je nach Betriebsart der reale Laufweg vom Leitpfad abweichen kann, tut dem erfinderischen Gedanken keinen Abbruch.

Es ist anzumerken, dass die technische Umsetzung einer Kugelumlenkung als in die Gewindespindel einzusetzendes Bauteil nicht zwingend bedeutet, dass das technische Bauteil Kugelumlenkung selbst den Leitpfad allseitig umschliesst. Sie kann auch, wie in den Zeichnungen ausgeführt, als Bauteil realisiert sein, das erst nach Einsetzen in die Aussparung in der Gewindespindel die Leitfunktion für die Kugeln erfüllt. Mit anderen Worten, Wandbereiche der Aussparung können die Kugelumlenkung so ergänzen, dass sie gemeinsam den Leitpfad umschliessen. Dies tut der Erfindung dahingehend keinen Abbruch, weil für den Fachmann der Leitpfad dennoch klar an der Kugelumlenkung ablesbar ist. In so einer bevorzugten Ausführungsform ist der Leitpfad für die Kugeln innerhalb einer (in die Gewindespindel eingesetzten) Kugelumlenkung rohrförmig umschlossen. Dabei ist die Wandung des Rohres abschnittsweise aus Oberflächenbereichen der Öffnungen in der Gewindespindel und der Kugelumlenkung selbst zusammensetzt. Der Begriff "rohrförmig" ist dabei nicht dahingehend auszulegen, dass der gesamte Leitpfad von einem perfekten Rohr umschlossen ist. Für den Fachmann verständlich, wird das Rohr so gestaltet, dass die Lenk- und Leitfunktion für die Kugeln optimal in Bezug auf Sicherheit und Geräuschentwicklung erfüllt wird.

Der Leitpfad für die Kugeln aus dem Kugelkanal in den Umlenkkanal, also in der Kugelumlenkung, wird jedoch stets mindestens einen kreisförmigen Durchlass mit lichter Weite Lw gewährleisten. Dieser wird etwas grösser gewählt als der Durchmesser der umlaufenden Kugeln, in der Regel wenige Zehntel Millimeter grösser.

Die Kugelumlenkung umfasst mindestens zwei Umlenkabschnitte. Ein Umlenkabschnitt ist ein Bereich oder Abschnitt des Leitpfades, der eine einheitliche Krümmung aufweist. Ein mathematisch exakter Halbkreis zum Beispiel hat eine Krümmung von 180°, ein Viertelbogen eine von 90°. "Einheitliche" Krümmung ist dabei nicht so zu verstehen, dass in einem Umlenkabschnitt ein einheitlicher Krümmungsradius vorliegen muss. Der Leitpfad im Umlenkabschnitt kann auch der Kurvenform einer Ellipse oder anderer mathematischer Kurve folgen. Wird von einem Umlenkabschnitt mit einem Viertelbogen gesprochen, so weisen Beginn und Ende des Umlenkabschnitts identisch kreisförmige Durchlässe auf, deren (ausgedehnte) Ebenen sich rechtwinklig schneiden.

Folgerichtig findet zwischen zwei Umlenkabschnitten also ein identifizierbarer (unterscheidbarer) Richtungswechsel statt, weil eine bestehende Krümmung endet. In der vorliegenden Erfindung wird der zweite der mindestens zwei Umlenkabschnitte betrachtet, der unmittelbar an den Übergang zum Kugelkanal grenzt. Er ist aus der Grundform eines Viertelbogens dahingehend abgeleitet, dass der (tatsächliche) Übergang von der Kugelumlenkung zum nachfolgenden Umlenkkanal parallel zur Abschlussebene des idealen Viertelbogens um eine Distanz d₁ zurückversetzt ist und zugleich der Durchlass Lw in der Höhe um eine Distanz d₂ erweitert ist. Wie in den Figuren deutlich wird, ist die Einleitung von der Kugelumlenkung in den Umlenkkanal somit nicht mehr perfekt tangential, sondern unstetig.

Die Erweiterung d₂ wird üblicherweise auf der von der Mittenachse des Kugelgewindetriebs wegweisenden Abschnitt der Kugelumlenkung vorgenommen. Bevorzugt gilt dabei d₁ ≈ d₂, mit anderen Worten der Versatz wird im Wesentlichen gleich gross gewählt. Je nach Auslegung der Kugelumlenkung wird ein Fachmann diese Vorgabe ohne weiteres umsetzen können.

Bevorzugt werden die Kugelumlenkung(en) einstückig ausgeführt. Sie können als Kunststoff-Spritzgussteil, als Metalldruck oder Metallspritzgussteil gefertigt werden. Spritzguss, auch in Metall, erlaubt Geometrien, die sich mit klassisch spanenden Herstellverfahren oder als Blechbiegeteil nicht darstellen lassen.

Weiterhin bevorzugt werden die beiden Versetzungen d₁ und d₂ so festgelegt, dass gilt: 0.2mm <= d₁ <= 0.3mm und 0.15mm <= d₂ <=0.25mm.

Für einen reibungslosen Betrieb hat es sich gezeigt, dass die lichte Weite Lw in der Kugelumlenkung 0.2mm bis 0.4mm grösser gewählt ist als der Durchmesser der im Kugelgewindetrieb vorgesehen Kugeln. Eine realistische Ausführungsform eines Kugelgewindetrieb setzt im Betrieb Kugeln von 3.6mm Nominal-Durchmesser ein bei einer lichten Weite Lw zwischen 3.8mm und 4mm (beide Werte eingeschlossen).

Eine Ausführungsform eines Kugelgewindetriebs sieht vor das gilt d₁ => d₂.

### KURZBEZEICHNUNG DER FIGUREN

Figur 1 zeigt ein Schnittbild durch einen generischen Kugelgewindetrieb mit Innenumlenkung nach Stand der Technik.
Figur 2 zeigt eine Prinzipskizze verschiedener, für die Erfindung wichtiger Begriffe bzw. technischer Merkmale.
Figur 3 zeigte eine Draufsicht auf eine Kugelumlenkung, die als halboffene Schale ausgelegt ist, welche in eine Gewindespindel eingesetzt werden kann.
Figur 4 ist eine Schrägansicht auf das Bauteil aus Figur 3.
Figur 5 ist eine Seitenansicht auf eine erfinderisch ausgestaltete Kugelumlenkung mit dem Übergang zum Umlenkkanal.

### BESCHREIBUNG DER FIGUREN

Die Erfindung wird im Folgenden mit Bezug auf die begleitenden Zeichnungen beispielhaft erläutert.

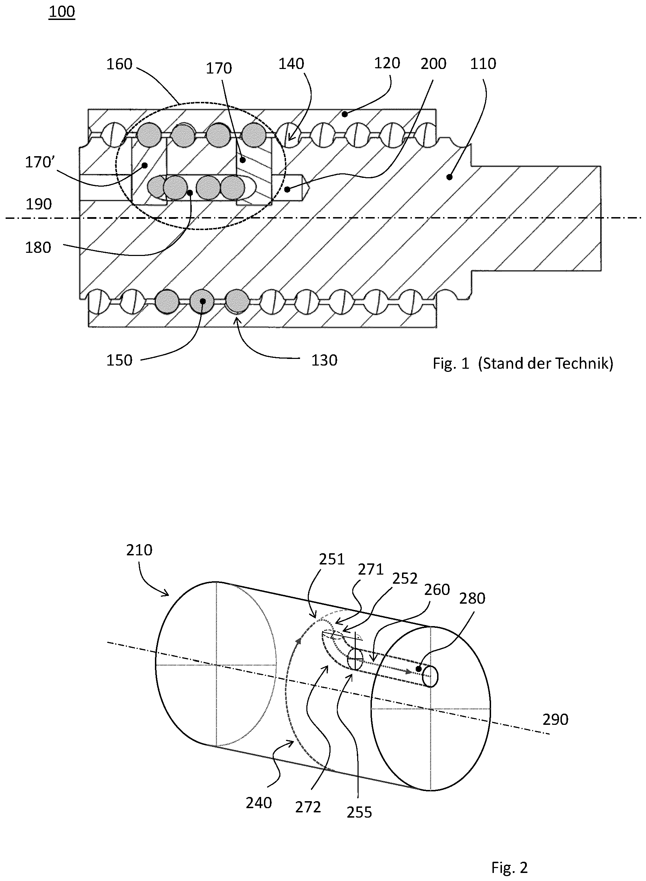

Figur 1 zeigt einen Kugelgewindetrieb 100 mit Innenumlenkung nach dem Stand der Technik und soll die verwendeten Begriffe erläutern. Die Gewindespindel 110 weist auf ihrer zylindrischen Aussenseite eine helixförmig gewundene, im Querschnitt schalenförmige Kugelrille 140 auf. Eine Spindelmutter 120 zeigt auf ihrer hohlzylindrischen Innenoberfläche eine komplementär geformte Kugelrille. Zusammen bilden diese Rillen einen Kugelkanal 130, in dem im Betrieb Kugeln 150 umlaufen können. Um einen geschlossenen Umlaufpfad für die Kugeln 150 zu erreichen, verfügt der Kugelgewindetrieb 100 über eine (je nach Ausführung mindestens eine) Kugelrückführung 160, die zwei Kugelumlenkungen 170, 170' und einen Umlenkkanal 180 umfasst. Dieser Umlenkkanal 180 ist parallel zur Mittenachse 190 der Gewindespindel 110 als längsachs-parallele Bohrung 200 angelegt. Die Kugelumlenkungen leiten die Kugeln aus dem Kugelkanal 130 in den Umlenkkanal und wieder zurück. Üblicherweise werden die Kugelumlenkungen identisch oder spiegelsymmetrisch ausgelegt, damit das Drehverhalten des Kugelgewindetriebes 100 unabhängig von der Antriebsrichtung ist.

Figur 2 zeigt abstrahiert die für das Verständnis der Erfindung relevanten Elemente und Begriffe vom Umlaufpfad einer (nicht gezeigten) Kugel aus einem Kugelkanal in einen Umlenckanal 280. Eine Gewindespindel 210 ist als Zylinder gezeigt mit einer angedeuteten, einzelnen Kugelrille 240, die als gestrichelte Spur angedeutet ist. An einem mit 251 bezeichneten Punkt beginnt die Ausleitung aus der Kugelrille 240 in einen ersten Umlenkabschnitt 271. Der Weg der Kugel durch die Kugelrückführung ist durch eine dünne gepunktete Linie, den Leitpfad 260 angedeutet, die - virtuell - den Weg des Mittelpunkts einer Kugel markiert. Der Übergang 252 zwischen dem ersten und dem zweiten Umlenkabschnitt (271-272) ist durch eine Kreisfläche angedeutet; der Durchgang des Leitpfads 260 ist durch ein Mittenkreuz gekennzeichnet. Beim Referenzzeichen 255 beginnt der parallel zur Mittenachse 290 angelegte Umlenkkanal 280. Für die vorliegende Erfindung ist der zweite Umlenkabschnitt 272 wichtig, daher ist er detaillierter ausgeführt als der erste Umlenkabschnitt 271, der lediglich den Abschnitt von der Kugelrille 240 bis zum Beginn des zweiten Umlenkabschnitts 272 / Übergang 252 beschreibt.

Der zweite Umlenkabschnitt 272 beschreibt klassisch (nicht erfindungsgemäss) einen Viertelbogen, der sauber tangential in den Umlenkkanal 280 ausläuft. In dieser Figur ist die Ebene des Übergangs 252 so dargestellt, dass eine Normale durch das Mittenkreuz des Übergangs 252 exakt radial verläuft und somit ein Lot von der Mittenachse 290 zur Oberfläche der Gewindespindel 210 bildet. Das ist aber nicht zwingend. Der Viertelbogen des ersten Umlenkabschnitts könnte auch in Richtung auf die Ausleitung 251 geneigt sein; wobei die Kreisfläche des Abschlusses vom Viertelbogen 255 ortsfest bleibt. Dennoch würden sich die Ebenen der Kreisflächen von Übergang 252 und dem Abschluss des Viertelbogens 255 nach wie vor unter 90° schneiden.

Die angesprochenen Kreisflächen von "Übergang 252" und "Abschluss Viertelbogen 254" sind nicht willkürlich oder virtuell angeführt, sondern bezeichnen Querschnitte des Leitpfades, die mindestens einem Kugeldurchmesser plus entsprechend ausgelegtem Toleranzmass entsprechen. In Figur 2 ist aus Übersichtsgründen nur eine Kugelumlenkung gezeigt, das entsprechende Gegenstück wäre in derselben Logik ausgeführt.

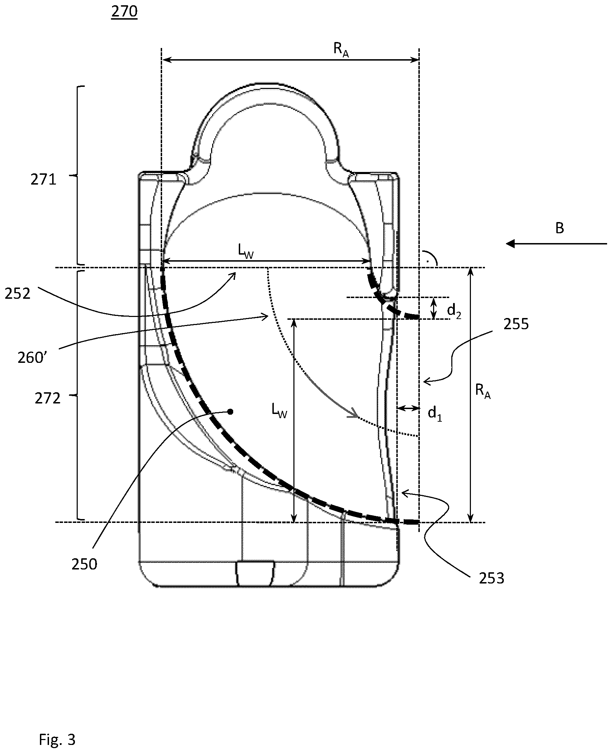

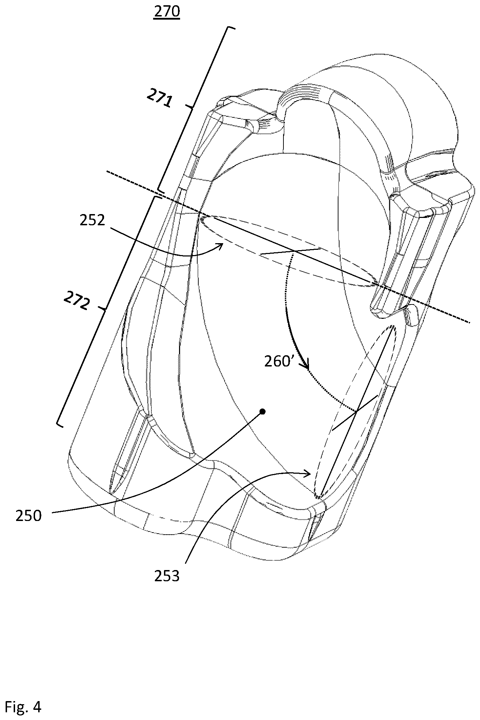

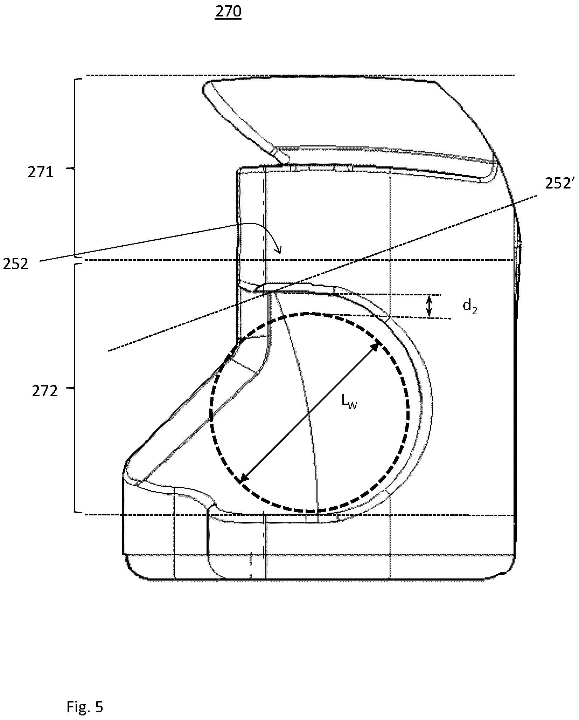

Figur 3 zeigt eine erfindungsgemässe Kugelumlenkung 270 mit einem ersten Umlenkabschnitt 271 und einem zweiten Umlenkabschnitt 272. Der Querschnitt ist so gelegt, dass der Viertelbogen 250 des zweiten Umlenkabschnitts exakt entlang des Leitpfads 260' geschnitten wird. Die Ebenen des Abschlusses 255 und des Übergangs 252 stehen aufeinander senkrecht. Sowohl am Übergang 252 wie auch am Abschluss des Viertelbogens 255 ist eine kreisrunde Durchlassweite mit der Dimension Lw gewährleistet (besser in Figur 4 erkennbar). Mit R_{A} ist der Radius des Viertelbogens 250 beschrieben. In dieser Figur wird deutlich, dass die Kugelumlenkung 270 zwar den Viertelbogen 250 aufnimmt, dass der Kugelpfad 260' jedoch verkürzt ist, weil der Auslauf des Viertelbogens 250 unvollständig ist. Die Ebene des Abschlusses 255 des Viertelbogens 250 ist planparallel um eine Distanz d₁ rückversetzt, so dass der Übergang in den Umlenkkanal bzw. das Ende der Kugelumlenkung 253 nicht mehr tangential erfolgt. Da der Rückversatz der Abschlussebene planparallel erfolgt und der Viertelbogen somit nicht um einen bestimmten Winkel verkürzt wird, ist zugleich die Abschlussöffnung der Kugelumlenkung, markiert durch die Referenz 253 um eine Distanz d₂ aufgeweitet. Auch in dieser Ebene der Referenz 253, wo die Kugelumlenkung faktisch in den Umlenckanal 280 (nicht eingezeichnet) mündet, ist mindestens der lichte Durchmesser Lw gewährleistet. Mit dem Buchstaben B ist die Blickrichtung von Figur 5 auf die Kugelumlenkung 270 bezeichnet.

Figur 4 ist eine Schrägansicht auf die Kugelumlenkung 270 wie in Figur 3 gezeigt. Der zweite Umlenkabschnitt 272 beginnt am Übergang 252 und erlaubt einen Leitpfad 260' entlang eines Viertelbogens, der bei der Referenz 253 am Ende der Kugelumlenkung endet. Die Ebenen von Übergang 252 und Ende Kugelumlenkung 253 stehen aufeinander senkrecht, weil, wie oben beschrieben, der Rückversatz der Abschlussebene 255 (hier nicht nochmals eingezeichnet) des auslaufenden Viertelbogens 250 in die Ebene von Referenz 253 planparallel erfolgt ist. Die Kreisflächen bei Übergang 252 und Ende Kugelumlenkung 253 weisen den lichten Durchmesser L_{w} auf.

Figur 5 ist eine Ansicht auf eine Kugelumlenkung 270 aus Blickrichtung B wie in Figur 3 gezeigt. Die Übergangsebene 252 ist hier parallel zur Unterkante der Kugelumlenkung 270 eingezeichnet. Das ist jedoch, wie oben erläutert, nicht zwingend. Die Ebene könnte auch verkippt vorliegen, wie als 252' eingezeichnet, ohne dass die erfinderische Lehre dadurch verändert würde.

## Patentansprüche

1. Kugelgewindetrieb (100), umfassend
- eine Gewindespindel (110, 210) und eine Spindelmutter (120, 210), die die Gewindespindel (110, 210) koaxial zumindest teilweise umschliesst; und
- eine Vielzahl von Kugeln (150) die im Zwischenraum zwischen Gewindespindel und Spindelmutter in einem helixförmigen Kugelkanal (130) umlaufen können; und
- mindestens eine Kugelrückführung (160) aus zwei Kugelumlenkungen (170, 170', 270) mit einem dazwischenliegenden Umlenkkanal (180, 280),
- wobei die Kugelumlenkungen (170, 170', 270) in Öffnungen in der Gewindespindel (110, 210) so einsetzbar sind, dass sie Kugeln (150) aus dem Kugelkanal (130) in den Umlenkkanal (180, 280) ein- bzw. ausleiten können und
- der Umlenkkanal (180, 280) als längsachs-parallele Bohrung (200) in der Gewindespindel (110) angelegt ist, wodurch ein geschlossener Umlenkpfad für die Kugeln (150) im Kugelgewindetrieb (100) etabliert wird;
- wobei der Leitpfad (260') für Kugel(n) (150) aus dem Kugelkanal in den Umlenkkanal (280)
∘ stets mindestens einen kreisförmigen Durchlass mit lichter Weite Lw aufweist und
∘ mindestens zwei Umlenkabschnitte (271, 272) mit unterscheidbaren Krümmungen umfasst, wobei der zweite Umlenkabschnitt (272), der unmittelbar an den Übergang zum Kugelkanal (280) grenzt, aus der Grundform eines Viertelbogens (250) abgeleitet ist
**dadurch gekennzeichnet, dass**
der Übergang (253) von der Kugelumlenkung (270) zum Umlenkkanal (280) parallel zur Abschlussebene (254) des idealen Viertelbogens (250) um eine Distanz d₁ zurückversetzt ist und zugleich der Durchlass Lw in der Höhe um eine Distanz d₂ erweitert ist, wobei gilt d₁ ≈ d₂

2. Kugelgewindetrieb (100) nach Anspruch 1, **dadurch gekennzeichnet, dass** jede Kugelumlenkung (210) einstückig ausgeführt ist.

3. Kugelgewindetrieb (100) nach Anspruch 1-2, **dadurch gekennzeichnet, dass** gilt 0.2mm <= d₁ <= 0.3mm und 0.15mm <= d₂ <=0.25mm.

4. Kugelgewindetrieb (100) nach Anspruch 1-3, **dadurch gekennzeichnet, dass** die Kugelumlenkung (210) als Kunststoff-Spritzgussteil, als Metalldruck oder Metallspritzgussteil gefertigt ist.

5. Kugelgewindetrieb (100) nach Anspruch 1-4, **dadurch gekennzeichnet, dass** der Leitpfad (260, 260') innerhalb einer Kugelumlenkung (170, 170') rohrförmig umschlossen ist, wobei die Wandung des Rohres sich abschnittsweise aus Oberflächenbereichen der Öffnungen in der Gewindespindel (110, 210) und der Kugelumlenkung (170, 170') selbst zusammensetzt.

6. Kugelgewindetrieb (100) nach Anspruch 1-5, **dadurch gekennzeichnet, dass** die lichte Weite Lw 0.2mm bis 0.4mm grösser gewählt ist als der Durchmesser der im Kugelgewindetrieb vorgesehen Kugeln (150).

7. Kugelgewindetrieb (100) nach Anspruch 1-5, **dadurch gekennzeichnet, dass** der Kugelgewindetrieb für den Betrieb mit Kugeln von 3.6mm Durchmesser ausgelegt ist und Lw zwischen 3.8mm und 4mm (beide Werte eingeschlossen) beträgt.

8. Kugelgewindetrieb (100) nach Anspruch 1-7, **dadurch gekennzeichnet, dass** gilt d₁ => d₂
